Europäisches Patentamt

European Patent Office

Office européen des brevets

(11) Veröffentlichungsnummer: **0 316 794**
**A2**

(12) **EUROPÄISCHE PATENTANMELDUNG**

(21) Anmeldenummer: 88118809.8

(22) Anmeldetag: 11.11.88

(51) Int. Cl.⁴: **A45C 11/00 , G02B 23/16**

(30) Priorität: 13.11.87 DE 8715127 U

(43) Veröffentlichungstag der Anmeldung:
24.05.89 Patentblatt 89/21

(84) Benannte Vertragsstaaten:
CH DE FR GB IT LI

(71) Anmelder: **Firma Carl Zeiss**

D-7920 Heidenheim (Brenz)(DE)

(84) **CH DE FR IT LI**

(71) Anmelder: **CARL-ZEISS-STIFTUNG trading as CARL ZEISS**

D-7920 Heidenheim (Brenz)(DE)

(84) **GB**

(72) Erfinder: **Schmidt, Wilhelm**
**Erzstrasse 12**
**D-7095 Rainau-Buch(DE)**

(54) **Etui für Hilfsmittel.**

(57) Die Erfindung betrifft Etuis für Hilfsmittel oder deren Aufbewahrungsbehälter. Die Hilfsmittel oder deren Aufbewahrungsbehälter werden dabei im Etui definiert festgelegt und sind gegen Stoß bzw. Bruch geschützt. Die Festlegung der Hilfsmittel oder deren Aufbewahrungsbehälter erfolgt durch elastische Einlagen im Inneren der Etuis, welche beim Hineinstekken in bzw. Herausholen des Hilfsmittels oder dessen Aufbewahrungsbehälter aus dem Etui nachgeben und den Weg freimachen. Wenn das Hilfsmittel oder dessen Aufbewahrungsbehälter im Etui ist, geben die elastischen Einlagen durch ihre Form hingegen einen festen Halt. Dies ermöglicht die Befestigung des Etuis an der Wand, wobei ein Hilfsmittel- oder Hilfsmittelaufbewahrungsbehältergriff auch nach unten weisen kann, ohne daß die Gefahr besteht, daß das Hilfsmittel oder dessen Aufbewahrungsbehälter sich unbeabsichtigt aus dem Etui löst.

Außerdem kann mit dem Gegenstand der Erfindung der Hilfsmittel-oder Hilfsmittelaufbewahrungsbehältergriff im Etui festgelegt werden, ohne daß die leichte Handhabung darunter leiden würde.

Fig. 1

## Etui für Hilfsmittel

Die Erfindung betrifft ein Etui für Hilfsmittel, bei welchem das Hilfsmittel oder dessen Aufbewahrungsbehälter mit einem Griff aus dem Etui genommen oder in das Etui gesteckt werden kann und das Hilfsmittel oder dessen Aufbewahrungsbehälter im Inneren des Etuis an mindestens zwei Punkten an der Innenseite des Etuis fest anliegt.

Bei Hilfsmitteln sind zum Schutz vor mechanischen Beschädigungen und zur Aufbewahrung Beutel und verschiedene Etuis bekannt.

Die Beutel bestehen aus einem flexiblen Material mit weicher Innenfläche. Mit ihnen sind Hilfsmittel, welche eine empfindliche Oberfläche haben (z.B. Handlupen) nur ungenügend geschützt, da, bedingt durch die Flexibilität des Beutelmaterials, leicht starke lokale Belastungen auftreten können. Darüber hinaus geben die Beutel den Hilfsmitteln keinen festen Halt und beim Transport der Hilfsmittel können empfindliche Oberflächen leicht durch scheuernde Einwirkungen der Beutelinnenseiten beschädigt werden.

Etuis sind für die Aufbewahrung von Hilfsmitteln sehr viel besser geeignet. Durch die Möglichkeit, die Etuis starr auszubilden, kann der Schutz vor äußeren mechanischen Belastungen erheblich verbessert werden. Um dem Hilfsmittel aber in dem Inneren des Etuis einen Halt zu bieten, erfolgt meist eine Festlegung des Hilfsmittels mit starren Körpern, welche eine schnelle Herausnahme des Hilfsmittels aus dem Etui verhindern. Außerdem sind diese Etuis meist mit Verschlüssen versehen, die bei ungenügend massiver und damit teurer Art schnell verschleißen und außerdem keine einfache Handhabung erlauben.

Bei anderen Etuis erfolgt die Festlegung über eine Reibung zwischen dem Inneren des Etuis und bestimmten Flächen des Hilfsmittels. Auch wenn diese Reibung meist nicht zwischen dem Inneren des Etuis und den empfindlichen Oberflächen des Hilfsmittels geschieht, um deren Schädigung zu verhindern, so kann meist ein Kontakt zwischen ihnen nicht ausgeschlossen werden und somit gleichzeitig die Schädigung der empfindlichen Oberflächen des Hilfsmittels. Außerdem sorgt die durch die Reibung bedingte elektrostatische Aufladung sehr schnell für eine Verschmutzung des Etuis oder des Hilfsmittels. Desweiteren neigt der im Inneren der Etuis angebrachte, elastische Belag durch die andauernde Belastung nach längerer Benutzung zu einer endgültigen Verformung, so daß es eine Frage der Zeit ist, bis die Hilfsmittel im Etui keinen festen Halt mehr haben. Werden die Hilfsmittel öfters in gleicher Weise in das Etui eingeführt, so lassen sich Abriebserscheinungen auf dem Hilfsmittel nur schwer vermeiden.

Aufgabe der Erfindung ist es, ein Etui für Hilfsmittel oder Aufbewahrungsbehälter zu erhalten, welches dem Hilfsmittel oder einem Aufbewahrungsbehälter auch wenn es empfindliche Oberflächen hat, einen sicheren Halt gewährleistet, ohne die empfindlichen Oberflächen zu belasten und welches einen verschleißunanfälligen, leicht lösbaren Verschluß besitzt.

Diese Aufgabe wird nach dem kennzeichnenden Teil des Hauptanspruches dadurch gelöst, daß auf der gegenüberliegenden Seite der Punkte, an denen das Hilfsmittel oder dessen Aufbewahrungsbehälter an der Innenseite des Etuis fest anliegt mindestens eine elastisch deformierbare Einlage an der Entnahmeöffnung an mindestens einer inneren Seite des Etuis mit direktem Kontakt zum Hilfsmittel oder dessen Aufbewahrungsbehälter vorhanden ist, und damit das Hilfsmittel oder dessen Aufbewahrungsbehälter festlegt.

Die Erfindung wird im folgenden für Handlupen-Etuis näher erläutert, wobei aber der Einsatz der Neuerung für Aufbewahrungs behälter anderer Hilfsmittel (z.B. Schachteln), deren Form den Handlupenformen ähneln, durch diese Beschreibung, welche dem besseren Verständnis der wesentlichen Punkte der Erfindung dient, in keiner Weise eingeschränkt sein soll.

Durch die Erfindung wird erreicht, daß vor allem Handlupen in den Etuis einen festen Halt haben, ohne daß die Lupenlinse in Kontakt mit dem Inneren der Etuis stehen muß und die elastische Einlage sich nur selten, nämlich bei der Entnahme oder dem Hineinstecken, in einem deformierten Zustand befindet. Durch diese Entspannung des haltenden Elements des Etuis ist eine lange Lebensdauer der Einlage und somit eine lange Gebrauchsfähigkeit des Etuis gewährleistet. Außerdem hat die Lupenfassung bei Handlupen im Etui einen festen Halt, ohne daß der Halt durch eine Deformation, z.B. Reibung, erzeugt wird. Der Halt wird realisiert durch einen der Form der Linsenfassung angepaßten Hohlraum im Etui, wobei gewisse Bereiche elastisch sind, um eine schnelle und leichte Entnahme bzw. ein schnelles und leichtes Hineinstecken der Handlupe in das Etui zu ermöglichen.

Um einen größtmöglichen Schutz der Hilfsmittel im Etui zu erreichen, ist es vorteilhaft, die Wände des Etuis möglichst unelastisch auszubilden. Dadurch wird sichergestellt, daß das Etui im Einsatz starken mechanischen Belastungen ausgesetzt werden kann, ohne daß es zu einer Schädigung der Handlupe kommt. Insbesondere soll mit den unelastischen Außenwänden verhindert werden, daß das Etui mit den empfindlichen Oberflächen in Berührung kommt und auf die anderen Seiten der Hilfsmittel ein seitlicher Druck übertragen wird, welcher zu Spannungen auch auf den empfindlichen Flächen führen könnte.

Um bei einer Ablage des Etuis mit Inhalt den Inhalt vor Erschütterungen zu bewahren, welche durch die unelastische Oberfläche direkt auf das Hilfsmittel und somit auf die empfindlichen Teile übertragen würde, ist es vorteilhaft, das Etui an den äußeren Auflageflächen mit einem weichen, elastischen und somit stoßdämpfenden Überzug zu versehen.

Die Bewegung des Hilfsmittels im Etui sollte möglichst leicht sein, d.h. die Innenseite des Etuis sollte einer Bewegung des Hilfsmittels einen möglichst geringen Widerstand entgegenbringen. Eine positive Ausgesaltung der Erfindung ist es deshalb, die Innenwände des Etuis mit einer möglichst glatten Beschichtung bzw. einem möglichst glatten Belag zu versehen. Dadurch wird auch die Schmutz- und Staubanlage im Inneren des Etuis durch elektrostatische Auflagerung minimiert.

Die elastische Einlage kann vorteilhafterweise aus demselben elastischen Material des weichen elastischen und stoßdämpfenden Überzuges der äußeren Auflageflächen des Etuis bestehen. Die elastische Einlage kann aber auch durch einen elastischen Grundkörper auf den harten Wänden bestehen, der gegebenenfalls einen Überzug aus der glatten Beschichtung bzw. dem glatten Belag der Innenwände des Etuis erhalten kann. Jede andere Realisierung der Einlage ist auch für die Erfindung in gleicher Weise zu verwenden, solange die Einlage elastisch nachgiebig ist und vorzugweise eine möglichst glatte Oberfläche besitzt.

Die Erfindung läßt sich realisieren in Etuis, welche der Form von Handlupen entsprechen und diese formschlüssig umschließen, damit das Hilfsmittel im Etui möglichst wenig Platz benötigt. Es kann aber auch sinnvoll sein, dem Etui eine andere, nicht der Hilfsmittelform entsprechende äußere Abmessung (z.B. für Lagerzwecke eine bessere Stapelbarkeit usw.) zu geben. Jede dieser Formgebungen hat für sich besondere Vorteile.

Insbesondere für runde Hilfsmittel ist es vorteilhaft, wenn sich die elastische Auflage bzw. Auflagen am kreisförmigen Umfang befinden. Dabei ist es vorteilhaft, jeweils eine elastische Auflage auf jeder Seite der Entnahmeöffnung im Inneren des Etuis vorzusehen, obwohl auch nur eine elastische Auflage auf einer Innenseite der Entnahmeöffnungsbegrenzung für einen sicheren Halt des Hilfsmittels im Etui voll ausreicht.

Insbesondere bei den runden Hilfsmitteln ist es vorteilhaft, den Innenraum des Etuis derart zu gestalten, daß die untere kreisförmige Hälfte des Etuis exakt mit der Form des aufzunehmenden Hilfsmittels übereinstimmt und diesen Halbkreis mit zwei fast parallelen, leicht nach außen geneigten Geraden zu verlängern. An diese fast parallelen Geraden können dann die elastischen Einlagen so angepaßt und befestigt werden, daß ihre entspannte Form möglichst exakt mit dem zu haltenden Hilfsmittel übereinstimmt. Soll das Hilfsmittel aus dem Etui entfernt werden, so können sich die elastischen Einlagen deformieren und in den Raum gedrückt werden, welcher sich zwischen dem fast parallelen, leicht nach außen geneigten Geraden und den entsprechenden exakt parallelen Geraden befindet.

Die elastischen Einlagen können aber auch zur Festlegung des Hilfsmittel-Griffes verwendet werden. Dazu ist es vorteilhaft sie auf jedem Deckel zu beiden Seiten des Griffes anzubringen. Je elastischer der Deckel dabei nach außen ausweichen kann, um so unelastischer können die Einlagen gestaltet werden. Eine besonders vorteilhafte Benutzung dieser Erfindung besteht dabei in der Möglichkeit, die elastischen Einlagen gleichzeitig zum Halten des Hilfsmittels als auch zur Festlegung des Hilfsmittel-Griffes benutzen zu können.

Ein besonderer Vorteil dieses Etuis für Hilfsmittels ist darin zu sehen, daß das Etui bei Bedarf in jeder Stellung, (d.h. Hilfsmittelgriff nach unten, Hilfsmittelgriff nach oben und Hilfsmittelgriff horizontal) überall befestigt werden kann, ohne daß die Gefahr des Herausfallens des Hilfsmittels besteht und ohne daß die Herausnahme des Hilfsmittels nicht möglich wäre.

Weitere Vorteile der vorliegenden Erfindung ergeben sich aus der nachfolgenden Beschreibung von Ausführungsbeispielen anhand der Figuren 1 - 11 der Zeichnung.

Fig. 1 rundes, formschlüssiges Handlupen-Etui;

Fig. 2 Seitenansicht von Fig. 1;

Fig. 3 rundes Handlupen-Etui mit Handstielfestlegung;

Fig. 4 Seitenansicht von Fig. 3, offene Ausführung;

Fig. 5 Seitenansicht von Fig. 3, halbgeschlossene Ausführung;

Fig. 6 Seitenansicht eines runden Handlupen-Etuis mit Handstielfestlegung und modifizierter Linsenfassungsfestlegung;

Fig. 7 rechteckiges Etui für runde Handlupen mit Stielfestlegung;

Fig. 8 Etui für rechteckige Handlupen;

Fig. 9 Seitenansicht von Fig. 8.

Fig. 10 Etui als Aufbewahrungsbehälter für schachtelförmige Aufbewahrungsbehälter;

Fig. 11 Etui als Aufbewahrungsbehälter für Seitenansicht von Fig. 10

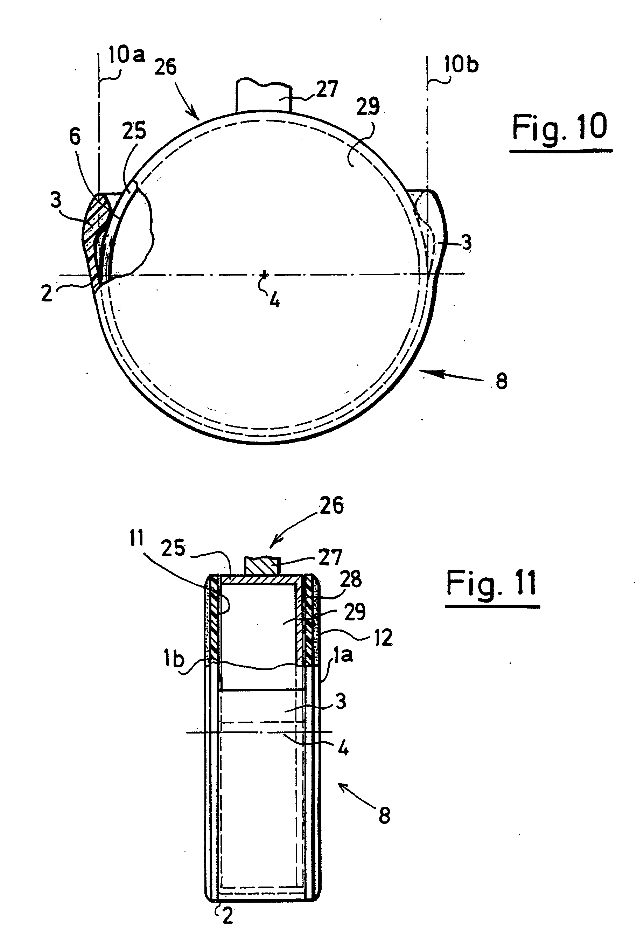

Die Erläuterung der Erfindung anhand von Handlupen-Etuis soll den Anwendungsbereich der Erfindung in keiner Weise nur hierauf begrenzen. Selbstverständlich ist die Erfindung in all denjenigen Anwendungsbereichen anwendbar, in welchem ein Gegenstand in einem anderen Gegenstand eingeführt wird und eine leichte Lösung der Verbindung dieser beiden Körper bei vorgegebener Belastung angestrebt wird. Dies sei durch die Fig. 10 und 11 beispielhaft erläutert.

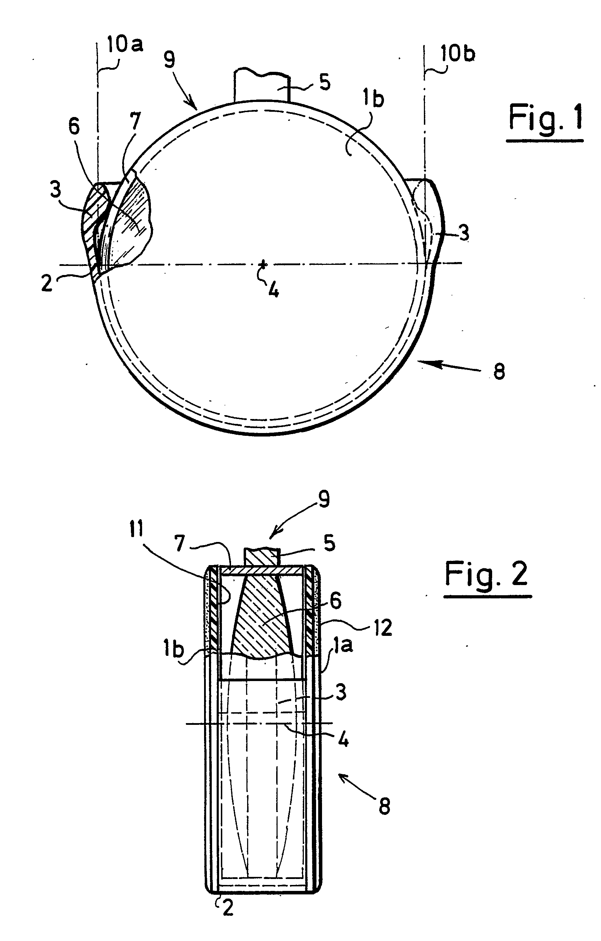

In Fig. 1 ist ein rundes, formschlüssiges Handlupen-Etui (8) in Aufsicht dargestellt. Die Handlupe (9) besteht aus einem Handgriff (5), einer Linsenfassung (7) und einer Linse (6) mit ihrem Mittelpunkt (4). Die Handlupe (9) liegt im unteren Teil (d.h. demjenigen Teil der Linse, welches vom Handgriff (5) gesehen unterhalb des Mittelpunktes (4) liegt) fest an der Seitenwand (2) des Etuis (8) entlang eines Halbkreises an. Oberhalb des Linsenmittelpunktes (4) verlaufen die Seitenwände (2) beidseitig der Stiel (5) -Mittelpunkt (4) - Verbindungslinie schräg nach außen. An dem Ende der Seitenwände (2) haben diese eine derartige elastische Einlage (3), daß es wieder zu einer Anlage der elastischen Einlage (3) an die Linsenfassung (7) kommt. Wird nun die Lupe (9) aus dem Etui (8) herausgezogen, so wird der Raum zwischen den beiden eingezeichneten Hilfslinien (10a,b) von der Linsenfassung (7) beansprucht. Damit der Linsenfassung (7) dieser Raum bei dem Herausziehen zur Verfügung steht, müssen die überstehenden elastischen Einlagen (3) an dem Ende der Seitenwände (2) sich deformieren. In dem in dieser Zeichnung angedeuteten Fall wird die im Weg stehende elastische Einlage (3) in den leeren Zwischenraum zwischen Einlagenbeginn und Beginn der runden Halbschale gedruckt. Diese Wirkungsweise ist am leichtesten mit einer elastischen deformierbaren Einlage (3) zu realisieren. Der Grad der Elastizität legt dabei die Kraft fest, welche benötigt wird, um die Lupe (9) aus ihrem Etui (8) zu trennen.

Da es sich hier um eine elastische, federnde Wirkung der Seitenwand (2)-Enden handelt, kann dieselbe Wirkung auch mit allen anderen federnden Mitteln realisiert werden, wie z.B. einem Federstahl oder einer elastischen Einlage, wobei die Befestigung der Seitenwände (2) im Bereich deren Enden an den beiden Etuideckeln (1) eine Auslenkung der Seitenwand (2)-Enden weg vom Mittelpunkt (4) erlaubt, um der Linsenfassung (7) bei der Herausnahme bzw. beim Hineinstecken ausweichen zu können.

In Fig. 2 ist die Seitenansicht von Fig. 1 zu sehen. Die Lupe (9) mit dem Handgriff (5), der Linsenfassung (7) und der Linse (6) befindet sich in ihrem Etui (8). Die beiden Etuideckel (1a,1b) begrenzen die Lupe (9) hier seitlich, während die Seitenwände (2) aus dieser Sicht kaum zu sehen sind. Sehr deutlich ist hier aber zu sehen, daß sich die elastischen Einlagen (3) der Seitenwände (2) an deren Ende oberhalb des Linsenmittelpunktes (4) befinden. Die Innenseiten der beiden Etuideckel (1a,b) sind mit einem glatten, stoffartigen Überzug (11) versehen, während die Außenseiten der beiden Etuideckel (1a,b) einen elastischen, stoßabsorbierenden Überzug (12) besitzen.

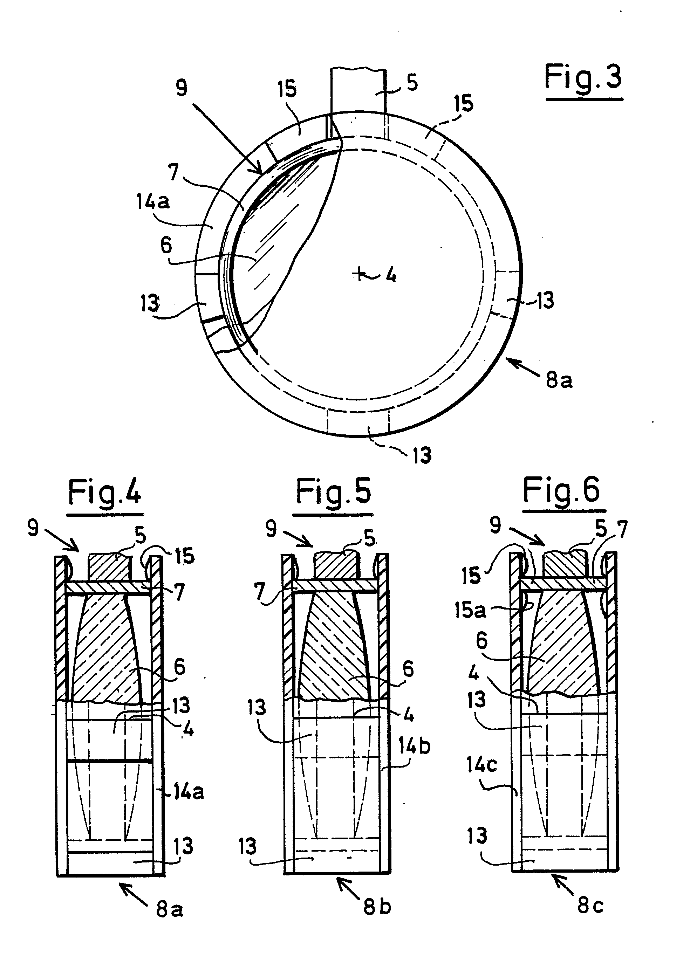

In Fig. 3 ist ein ebenfalls rundes Handlupen-Etui (8a) zu sehen, welches diesmal die Linse nicht formschlüssig umschließt, dafür aber eine Festlegung (15) des Stiels (5) besitzt. Bei diesem Etui (8a) liegt die Linsenfassung (7) im unteren Teil (unterhalb des Mittelpunktes (4) vom Stiel (5) aus gesehen) an drei Lupenauflageflächen (13) auf. Da sich alle drei Auflagen (13) (es können auch zwei Lupenauflagen (13) sein, welche zusammen mit der Festlegung (15) des Stiels (5) den durch die Linse (6) beschriebenen Teilkreis in drei gleich große Sektoren aufteilen) an einem Halbkreis befinden, ist erst durch die Stielfestlegung (15) zu beiden Seiten des Stiels (5) eine feste Lage der Lupe (9) im Etui (8a) sichergestellt. Die Deckel (14a) des Etuis (8a) begrenzen dieses seitlich, wobei die Lupe (9) hier nicht bis zum seitlichen Rand reicht. Die Verbindung der beiden seitlichen Deckel (14a) wird durch die drei Lupenauflagen (13) hergestellt, da die beiden Festlegungen (15) jeweils nur an einem Deckel (14a) befestigt sind. Dafür kann der obere Teil des Deckels (14a) bei Herausnahme bzw. Hineinstecken der Linse in das Etui elastisch nachgeben.

In Fig. 4 ist das Etui (8) in seitlicher Ansicht dargestellt. Die Festlegungen (15) befinden sich auf beiden Deckeln (14a) des Etuis (8a), wobei ein seitliches Anbringen einer Festlegung (15) an nur einem Deckel (14a) zum sicheren Halt der Lupe (9) im Etui (8a) ausreichen würde. Da dabei aber die Elastizität der Festlegungen niedriger sein müßte als bei der beidseitigen Anbringung und damit die Linsenfassung einseitig stark bei dem Herausholen bzw. Hineinstecken belastet würde, wurden die Festlegungen (15) an beiden Deckeln (14a) innen angebracht. Der Raum zwischen den einzelnen Lupenauflagen (13) ist bei diesem Etui (8a) offen gelassen.

Die Festlegungen (15) sind so gestaltet, daß sie nach außen eine flachere Keilform besitzen als nach innen, um ein sicheres Einführen der Lupe (9) in das Etui (8a) zu gewährleisten, andererseits der Lupe (9) im Etui (8a) einen sicheren Halt zu geben. Durch die Elastizität der beiden Deckel (14a) können die Festlegungen (15) beim Herausnehmen bzw. Hineinschieben der Lupe (9) diese ausweichen, ohne daß nach Passieren der Linsenfassung (7) diese gegen die Linse (6) schlagen können.

In Fig. 5 besteht der einzige Unterschied zu Fig. 4 darin, daß der Raum zwischen den Lupenauflagen (13) geschlossen wurde. Dieser Verschluß des Zwischenraumes kann den Raum zwischen Linsenfassung (7) und dem Etui (8a) freilassen, es

4

besteht aber auch die Möglichkeit, diesen Raum bis zur Linsenfassung (7) ganz zu schließen.

In Fig. 6 besteht der Unterschied zu Fig. 5 darin, daß die beiden Festlegungen (15) durch zwei weitere Festlegungen (15a) ergänzt werden. Zwischen diesen Festlegungen (15,15a) ist nun die Linsenfassung (7) durch den Abstand der Festlegungen (zwischen 15 und 15a) definiert festgelegt.

Die Festlegungen (15,15a) in den Fig. 3 - 6 brauchen sich nicht nur um den Stiel herum befinden, sondern können bis zu den Lupenauflagen (13) reichen und sich auch zwischen den Lupenauflagen (13) befinden, um einen sicheren Staubabschluß der Linsenfassung (7) mit dem Etui (8a-c) für die Linse (6) sicherzustellen und um bei den Linsenauflagen (13) für eine Druckentlastung zu sorgen.

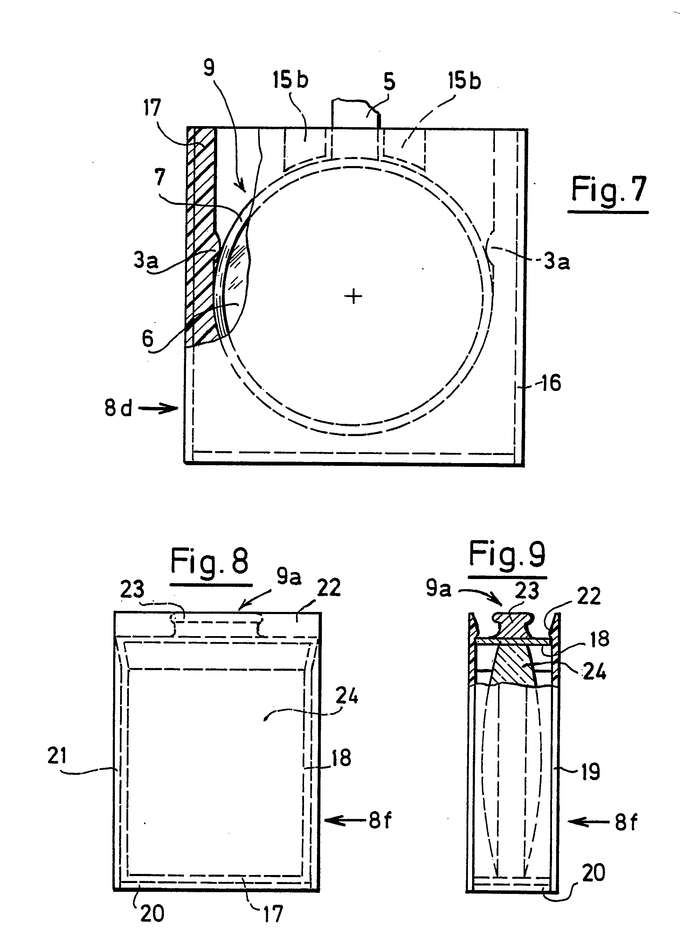

In Fig. 7 ist ein Etui (8d) für eine runde Handlupe (9) gezeigt, welches eine rechteckige Außenform hat und eine Festlegung (15b) des Lupenstiels (5) besitzt. Dieses Etui (8d) entspricht in seinem Inneren im wesentlichen dem Etui (8) aus Fig. 1 und 2. Die einzigen Unterschiede bestehen in der elastischen Vollausschäumung des Bereiches (17) zwischen der Linsenfassung (7) und den versteiften Außenflächen (16) des Etuis (8d). Durch die Vollausschaumung (17) ist der Bereich um die elastischen Einlagen (3a) elastisch genug, um die bei der Handhabung (Herausholen und Hineinstecken) der Lupe (9) entstehenden Deformierungen durch die Bewegung der Linsenfassung (7) so nachzugeben, daß ein Leerraum im Gegensatz zu Fig. 1 hier bei den elastischen Einlagen (3a) nicht vorgesehen werden muß. Die elastischen Einlagen (3a) können hierbei aus dem Material des vollausgeschäumten Bereiches (17) bestehen. Die Nachgiebigkeit des mit elastischem Material voll ausgeschäumten Bereiches (17) ist ein Merkmal für den sicheren Halt der Linse. Sie sollte deshalb nicht allzu hoch sein. Außerdem kann mittels der Festlegungen (15b) der Stiel (5) der Lupe (9) in eine definierte Lage gebracht werden. Diese Festlegungen (15b) können die in der Fig. 7 gezeigte Form haben und sich nur außerhalb des Kreises der Linsenfassung befinden, oder aber entsprechend Fig. 6 zu beiden Seiten der Linsenfassung (7) der im Etui (8d) befindlichen Lupe (9) angebracht werden. Die elastischen Einlagen (3a) sollten sich oberhalb des Linsenmittelpunktes (4) befinden, um so durch ihre Keilwirkung die Lupe (9) zu halten.

In Fig. 8 ist ein Etui (8f) für eine rechteckige Handlupe (9a) gezeigt. Diese rechteckige Handlupe (9a) hat einen Griff (23) an der Linsenfassung (18) der Linse (24). Die Lupe (9a) erhält ihren Halt an den Begrenzungsseiten (20,21) des Etuis (8f), an welchen sie gut anliegt. Trotzdem besteht so viel Zwischenraum zwischen der Linsenfassung (18) und der Linse (24) zu den Begrenzungsseiten (20,21), daß die Lupe (9a) ihren Halt im Etui (8f) nicht durch eine Reibung erhält. Die Lupe (9a) wird vielmehr durch die Festlegung (22) oberhalb der Linsenfassung (18) im Etui (8f) gehalten. Die Lupe (9a) ist hier formschlüssig im Etui (8f) untergebracht. Selbstverständlich erlaubt es die Neuerung auch, den Griff (23) zu verlängern und somit aus dem Etui (8f) herausragen zu lassen.

In Fig. 9 ist das Etui (8f) aus Fig. 8 von der Seite abgebildet. Die Elastizität der Seitenwände (19) des Etuis (8f) ist hier so groß, daß auch hier für die Festlegungen (22) kein extra Raum berücksichtigt werden muß.

In Fig. 10 und 11 ist beispielhaft die Verwendung des Etuis (8) aus Fig. 1 und 2 als Aufbewahrungsbehälter anderer Hilfsmittel (26), deren Form den Handlupenformen ähnelt, gezeigt. Es handelt sich in diesem Fall um einen schachtelförmigen Körper (26) zur Aufnahme aufzubewahrender Körper.

Der schachtelförmige Körper (26) hat dieselbe runde äußere Form (25) von Handlupenfassungen, besitzt aber einen Boden (28). Dadurch kann man in dem Inneren (29) dieses schachtelförmigen Körpers (26) andere Gegenstände aufbewahren. An einem Griff (27) kann man den schachtelförmigen Körper (26) aus dem Etui (8) herausnehmen. Das Etui kann dabei die in Fig. 2 beschriebenen inneren und äußeren Überzüge (11 bzw. 12) besitzen.

In Fig. 3 - 9 wurde nichts mehr zu den in Fig. 2 erwähnten inneren und äußeren Überzügen (11 bzw. 12) gesagt. Selbstverständlich sind diese Maßnahmen zur sinnvollen Ausgestaltung der Neuerung auch für die anderen Etuis (8a-f) möglich. Die Weglassung diente nur dazu, die einzelnen Zeichnungen nicht zu überladen.

## Ansprüche

1. Etui für Hilfsmittel, bei welchem das Hilfsmittel oder dessen Aufbewahrungsbehälter an einem Griff aus dem Etui genommen oder in das Etui gesteckt werden kann und das Hilfsmittel oder dessen Aufbewahrungsbehälter im Inneren des Etuis an mindestens zwei Punkten an der Innenseite des Etuis fest anliegt, dadurch gekennzeichnet, daß auf der gegenüberliegenden Seite der Punkte, an denen das Hilfsmittel oder dessen Aufbewahrungsbehälter an der Innenseite des Etuis fest anliegt mindestens eine elastisch deformierbare Einlage an der Entnahmeöffnung an mindestens einer inneren Seite des Etuis mit direktem Kontakt zum Hilfsmittel oder dessen Aufbewahrungsbehälter vorhanden ist, und damit das Hilfsmittel oder dessen Aufbewahrungsbehälter festlegt.

2. Etui nach Anspruch 1, dadurch gekennzeichnet, daß die Verformbarkeit der Wände des Etuis gering ist.

3. Etui nach Anspruch 2, dadurch gekennzeichnet, daß die Außenseite der Wände mit einem weichen Überzug versehen sind.

4. Etui nach Anspruch 2, dadurch gekennzeichnet, daß die Innenseite der Wände mit einem glatten Überzug versehen sind.

5. Etui nach Anspruch 3, dadurch gekennzeichnet, daß der elastisch deformierbare Körper aus dem Material des äußeren weichen Überzuges hergestellt ist.

6. Etui nach Anspruch 4, dadurch gekennzeichnet, daß der elastische deformierbare Körper aus einem weichen Material ist, welches vom inneren Bezug überzogen ist.

7. Etui nach Anspruch 1, dadurch gekennzeichnet, daß bei runden Etuis der elastische Körper an den runden Umfang des Hilfsmittels oder dessen Aufbewahrungsbehälter anliegend ist.

8. Etui nach Anspruch 1, dadurch gekennzeichnet, daß im Etui das Hilfsmittel oder dessen Aufbewahrungsbehälter formschlüssig vorhanden ist.

9. Etui nach Anspruch 1, dadurch gekennzeichnet, daß die Form des elastisch deformierbaren Korpers die eines Doppelkeiles ist.

10. Etui nach Anspruch 9, dadurch gekennzeichnet, daß der elastisch deformierbare Keil unsymmetrisch aufgebaut ist und wobei die Steigung des Keilwinkels an beiden Keilenden unterschiedlich ist.

11. Etui nach Anspruch 1, dadurch gekennzeichnet, daß elastische Einlagen zur Festlegung des Hilfsmittel- oder Hilfsmittelaufbewahrungsbehältergriffes vorgesehen sind.

12. Etui nach Anspruch 11, dadurch gekennzeichnet, daß die elastischen Einlagen so ausgebildet sind, daß sie zugleich zur Festlegung des Hilfsmittels oder dessen Aufbewahrungsbehälter und des Hilfsmittel- oder Hilfsmittelaufbewahrungsbehältergriffes dienen.

EP 0 316 794 A2

Fig. 1

Fig. 2

87043 P

# Fig.3

# Fig.4

# Fig.5

# Fig.6

87 043 P

Fig.7

Fig.8

Fig.9

10a 26 27 29

6 25

3

2

4

8

## Fig. 10

10b

26

11 25 27

28

29

12

1b 1a

3

4

8

2

## Fig. 11